# EUROPEAN PATENT SPECIFICATION

(11) **EP 3 028 093 B1**
(45) Date of publication and mention of the grant of the patent: **28.09.2022**
(21) Application number: 14744530.8
(22) Date of filing: 25.07.2014
(51) Int. Cl.: G02C 5/08, G02C 5/04

(54) **FRAME FOR CORRECTIVE EYEGLASSES AND SUNGLASSES**
RAHMEN FÜR BRILLEN UND SONNENBRILLEN ZUR SICHTKORREKTUR
MONTURE POUR LUNETTES DE VUE ET LUNETTES DE SOLEIL

(30) Priority: 01.08.2013 IT TV20130122
(43) Date of publication of application: 08.06.2016
(73) Proprietor: Occhiali 2.0 S.r.l., 98051 Barcellona Pozzo di Gotto (ME) (IT)
(72) Inventor: PERDICHIZZI, Francesco, 98051 Barcellona Pozzo Di Gotto (IT)
(74) Representative: Modiano, Micaela Nadia
(86) International application number: PCT/EP2014/066036
(87) International publication number: WO 2015/014745

(56) References cited:
- WO-A1-2009/068291
- DE-A1-102005 043 306
- FR-A- 357 340
- JP-A- S5 983 128
- US-A- 1 910 460
- US-A- 3 907 410
- US-A- 5 208 616
- US-A- 6 022 105

## Description

The present invention relates to a frame for corrective eyeglasses and sunglasses.

Eyeglasses are usually constituted by a frame, often made of plastics or metal, which is mainly constituted by two eyepieces or lens mounts, two arms, and a bridge and/or a nosepiece.

The bridge is the connection between the eyepieces or lens mounts, and is arranged at the upper part of the eyepieces in line with the eyebrows.

The nosepiece is the connection of the eyepieces or lens mounts in an intermediate position, in contact with the nose.

The eyepieces accommodate previously-produced lenses that have been cut to size on the basis of the geometry of the eyepiece or lens mount proper.

Very often, eyeglasses are not positioned correctly on the face of the user because the size of the nosepiece of the eyeglasses is not adapted to the size of the nose of the user.

The part of the face that most influences the fit of an eyeglass frame, except for rare cases, is the nasal bridge which is different in shape and size for each individual.

Even the more or less trapezoidal shape of the cross-section of the nasal bridge determines the fit of the eyeglass frame.

The variability of sizes and shapes of nasal bridges creates difficulties for makers, who for each model of eyeglasses have to make as many frames (with different nosepiece measurements) as there are possible measurements of customers nasal bridges.

Currently for each model of eyeglasses, frames are made with two or three different sizes of bridges or nosepieces, so as to obtain some correspondence with the different sizes of nasal bridges.

In this way a segment of sizes of nasal bridges has been covered, but it is still a long way off from the ideal situation of adapting the eyeglass frame to the faces of all possible users, since all intermediate positions between one size of the nosepiece and the next are not covered.

From the industrial point of view, making, as currently happens for the known art, the same model of eyeglasses with several sizes of nosepiece entails a sharp increase in costs for producing the items and for managing production.

To meet customers needs quickly requires the production of stocks of all sizes of nosepiece with a major financial commitment and, sometimes, also resulting in a lot of unsold stock.

US6022105 discloses a detachable sunglasses with an adjustable bridge adapted for selectively adjusting the distance between two sun-lenses thereof, so that a particular style and size of such sunglasses can fit various shapes and sizes of eyeglasses. The adjustable bridge comprises a first bridge rod having an affixing end attached to the inner side of the first sun-lens and an adjustable end extended from the first sun-lens; a second bridge rod having an affixing end attached to the inner side of the second sun-lens and an adjustable end extended from the second sun-lens; a bendable bridge joint adapted for connecting the first bridge rod and the second bridge rod; and a locking means for fastening the bridge joint with the first and second bridge rods, so as to construct the sunglasses capable of adjusting the distance and angle between the two sun-lenses.

US 1910460 discloses a pair of goggles having a pair of eyecups each having a hinge pintle thereon, a pair of longitudinally slotted slide members having their respective ends pivotally mounted on the pintles and means to lock the slide members together.

US3907410 discloses a mechanism incorporated into an eye glasses frame in order that temple bars are comfortably rested behind the ears while at a same time the plane of the eye glasses lens are at a proper angle respective to a line of sight through them; the mechanism consisting of a pair of frictionally engagable, face plates on each temple bar, and each temple bar consisting of two legs one of which is hingedly connected to the lens frame and the other of which rests behind the ear, each of the legs having one of the face plates secured thereto, the face plates being rotatably adjustable respective to each other so that the vertical angle between the temple bar legs is selectively adjustable.

DE102005043306 discloses a spectacle magnifier, having a spectacle frame and a centrally mounted spectacle having a bull-head connector which retains a bull-head element. Both optical holders are made stirrup-shaped, such that they can be taken back from their suspension to slightly in front of the spectacle's lenses and they each have a holder ring on their ends for receiving an optical device. Between the bull-head element and a hinge there is arranged a vertically-extending LED holder and from the direction of viewing to the end of the hinge, there is screwed a fixture nut.

WO2009068291 discloses an articulated spectacle frame with wire assembled components, said components being able to slide and fold back past each other, when the spectacles are not being worn, characterised by using two lens rims for supporting lenses and being hinged together at their inner ends, and equipped with a joining slot on their outside, for orthogonal housing of components coaxial to each other and forming each of two temples, all these components being linked together by a wire passing into each of said components tensioning and connecting them in succession, when the two lens rims are located on the same plane in order to use them, whilst the wire slackens allowing disconnection of the temple components and the loosening of these from the components supporting the lenses, when the rims are rotated against each other.

US5208616 discloses folding spectacles comprising two symmetrically arranged spectacle frames and perpendicularly assembled temples, in which the two frames are assembled with a hinged joint in two parts, one of which has a spring pin protruding out of a blind hole in a groove and rolling over an arched end of the other part until it sticks in a notch of a groove to thus fix the two frames in an unfolded position. The frames can be easily, horizontally folded until they are parallel in a common plane and close together with their temples separately folded and lying across them.

FR357340 discloses an eyeglass frame nose clip mount with a regulating feature of the distance of the lenses in the plane of such lenses.

The aim of the present application is therefore to resolve the above mentioned technical problems, by eliminating the drawbacks in the cited known art and hence providing an invention that makes it possible to adapt the eyeglass frame to the size of the nasal bridge of every user.

Within the above aim, an object of the invention is to provide an invention that makes such adaptation possible rapidly and simply as a function of the specific morphological shape structures of the user.

Another object is to provide an invention that enables an optician to improve the service to his/her customers by offering them an eyeglass frame that is structured as a function of the specific facial characteristics of the customer, thus giving the perception that the eyeglass frame has been especially made for his/her face by taking account of the shape structure of his/her nasal septum.

Another object is to provide an invention that is structurally simple and low cost and can be made with the usual conventional plants.

The invention is as defined in claim 1.

Further characteristics and advantages of the invention will become better apparent from the detailed description of a particular, but not exclusive, embodiment, illustrated by way of non-limiting example in the accompanying drawings wherein:

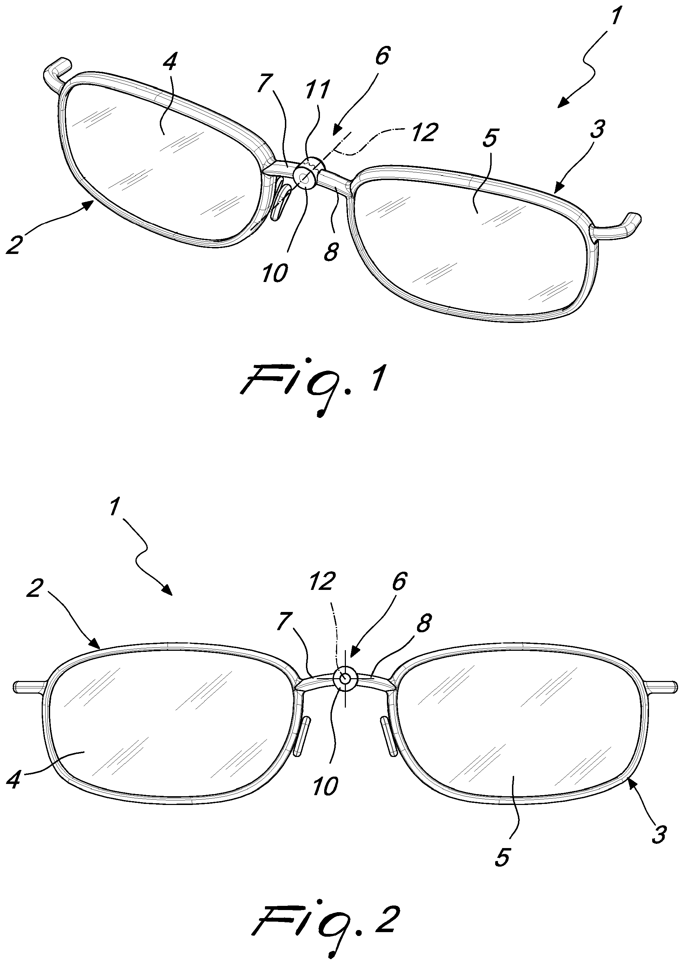

Figure 1 is a three-quarters side view of the frame in a first condition;
Figure 2 is a front elevation view of the frame in the previous figure;

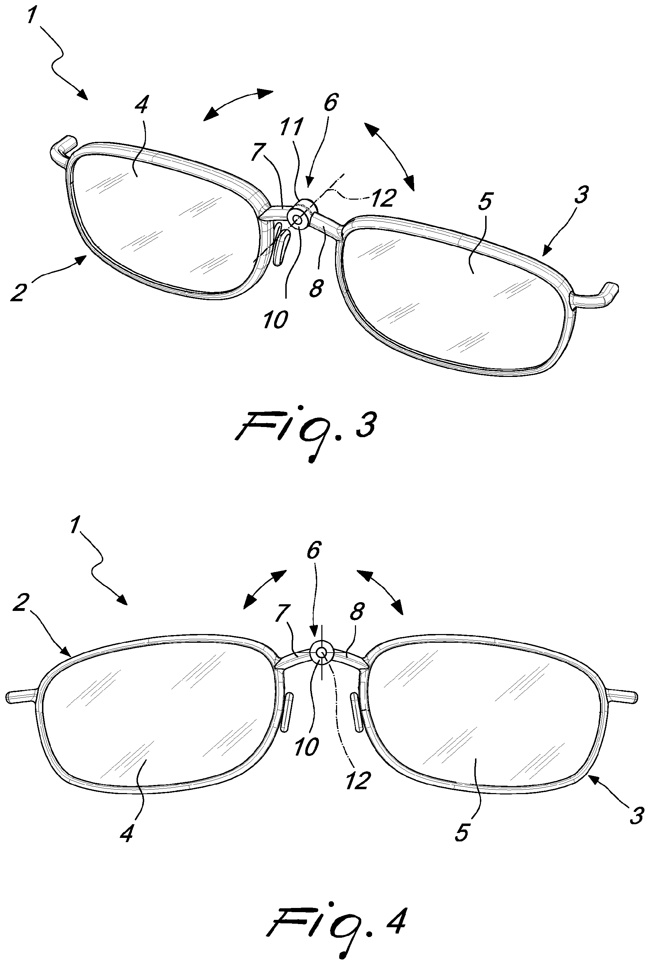

Figure 3 is a three-quarters side view of the frame in a second condition;
Figure 4 is a front elevation view of the frame in the previous figure;

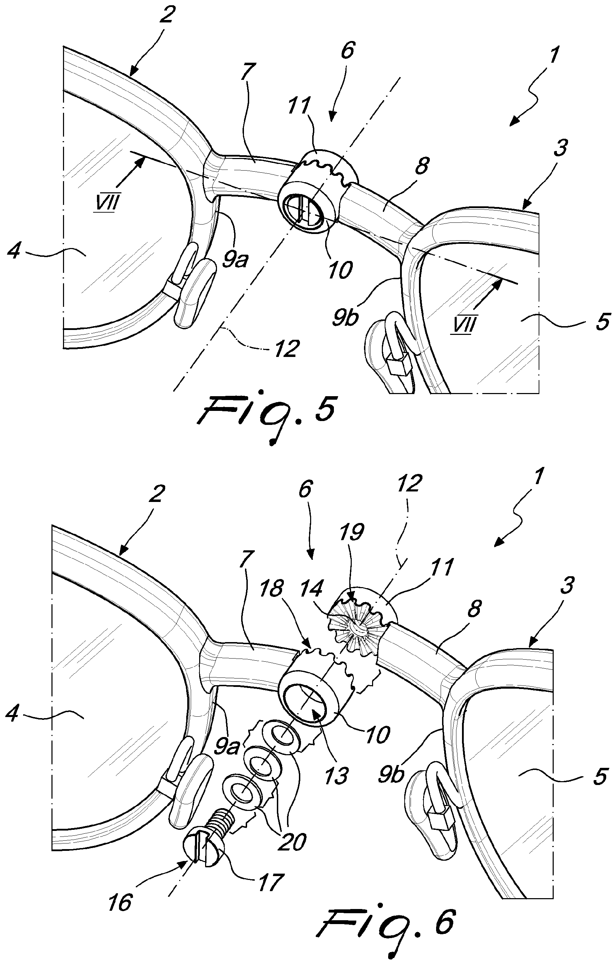

Figure 5 is a view of a detail of the frame;
Figure 6 is an exploded view of the detail in the previous figure;

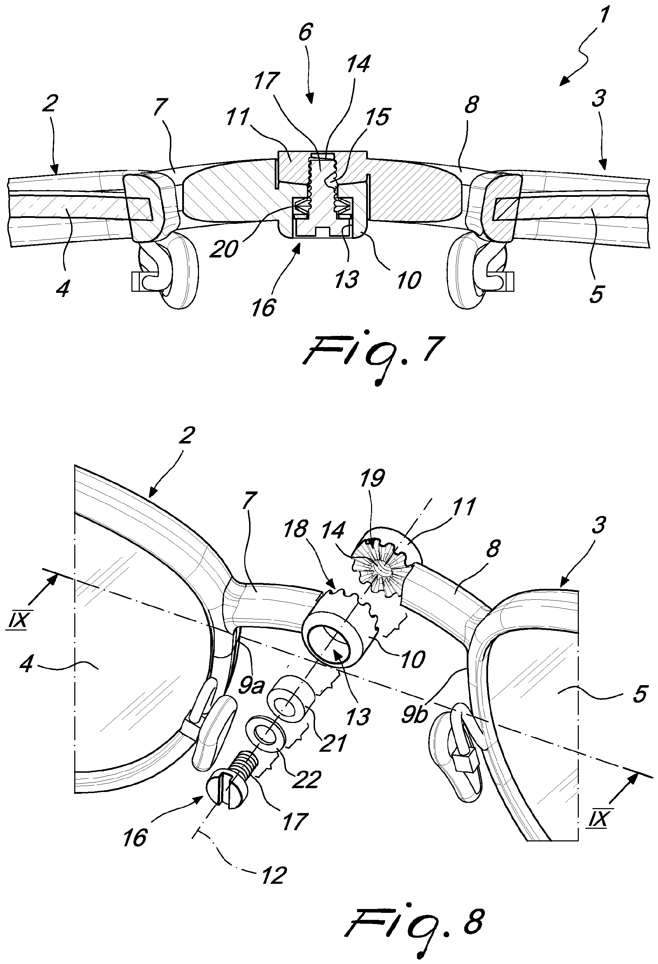

Figure 7 is a sectional view along the line VII-VII in Figure 5;
Figure 8 is an exploded view of a further embodiment;
Figure 9 is a sectional view along the line IX-IX in Figure 8;
Figure 10 is a view similar to that in Figure 5 of an exemplary frame not forming part of the invention;
Figure 11 is a sectional view along the line XI-XI in Figure 10;

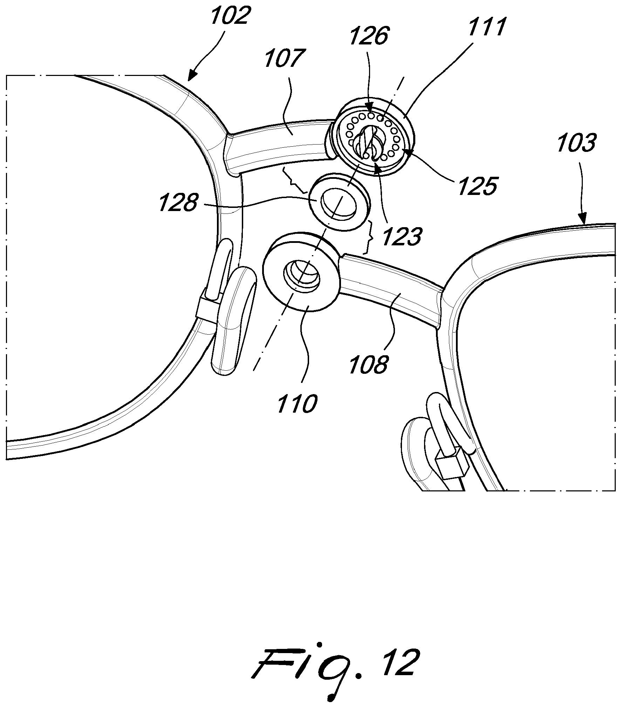

Figure 12 is a perspective exploded view of the frame of Figure 10.

In the embodiments illustrated, individual characteristics shown in relation to specific examples may in reality be interchanged with other, different characteristics, existing in other embodiments.

Moreover, it should be noted that anything found to be already known during the patenting process is understood not to be claimed and to be the subject of a disclaimer.

With reference to the figures, the reference numeral 1 generally designates a frame for corrective eyeglasses and sunglasses which is constituted by a first and a second support or eyepiece or lens mount 2, 3 for a lens 4, 5; the first and second supports 2, 3 are interposed and interact selectively with a nosepiece 6 which is the connection of the eyepieces or lens mounts in an intermediate position in contact with the nose.

The nosepiece 6 is constituted by a first arm 7 and by a second arm 8 which protrude, in mutually opposite directions, from the mutually facing outer lateral surfaces 9a, 9b of the first and second supports 2, 3.

Means for angular adjustment of the optical axes are associated with the ends of the first arm 7 and of the second arm 8, such means being constituted by a first cylindrical sleeve 10 and by a second cylindrical sleeve 11, which protrude radially from the ends, arranging themselves along the same axis 12 that is substantially perpendicular to the plane of arrangement of the first and second supports 2, 3.

The first and second cylindrical sleeves 10, 11 respectively have a first axial seat 13 and a first hole 14 that is threaded internally; the first axial seat 13 has, in the direction of the second cylindrical sleeve 11, a second hole 15 whose diameter is substantially equal to the diameter of the first hole 14 so as to define a step-like discontinuity.

The head of a screw 16 is arrangeable at the first axial seat 13 and its shank 17 passes through at the second hole 15 and is threaded complementarily to the first hole 14.

The frame has, at the first and second sleeves 10, 11, grip means, according to preset positions along a circumference, for engagement means constituted respectively by a first radial set of teeth 18 and by a second radial set of teeth 19, the sets being provided at the mutually facing lateral surfaces of the first and second sleeves 10, 11.

The grip and engagement means lie on a plane that is substantially parallel to the plane of arrangement of the first and second supports.

Elastically deformable means, such as one or more Belleville springs 20, are arranged coaxially to the shank 17 of the screw 16 in the region that lies between the head of the latter and the second hole 15.

Alternatively, use can be made of a cylindrical block 21 constituted by an elastomer that can be arranged at the first axial seat 13 adjacent to the step-like discontinuity and interacts with an adapted washer 22 that interacts with the head of the screw 16.

Thus by intervening on the degree of locking of the screw 16, a mutual rotation can be allowed between the first sleeve 10 and the second sleeve 11, thus achieving a rotation, according to the axis 12, of the first and second supports 2, 3 which entails a consequent approach or distancing of these latter items.

The presence of the elastically deformable elements 20, once the screw 16 is loosened, keeps the first and the second sleeve 10, 11 in the initial (or basic) position.

The rotation in order to search for the final position will be under tension, which is provided by the Belleville springs 20.

If the elastically deformable elements were not present then, once the screw was loosened, the initial position would be lost and therefore the axial adjustment in order to search for the desired position would occur at random and many attempts would be necessary in order to find the desired position.

Once the desired angular position has been found between the first and second sleeves 10, 11 all that is necessary is to tighten the screw 16 which will prevent sliding between the first and the second radial set of teeth 18, 19.

The function of the elastically deformable elements is to enable a partial distancing of the first and of the second sleeve 10, 11 in order to allow the disengagement of the teeth that constitute the first and second radial sets of teeth 18, 19 while at the same time keeping the first and second sleeves 10, 11 mutually associated.

Thus it has been found that the invention fully achieves the intended aim and objects, a frame having been obtained that makes it possible to be adapted to the actual size of the nasal bridge of every user, such adjustment being capable of being carried out rapidly and simply as a function of the specific morphological shape structures of the user.

The optician can thus improve the service to his/her customers by offering them an eyeglass frame that is structured as a function of the specific facial characteristics of the customer, thus giving the perception that the eyeglass frame has been especially made for his/her face by taking account of the shape structure of his/her nasal septum.

Furthermore the invention, by acting on the size of the nosepiece, determines the distance of the optical centers of the frame and therefore, in prescription eyeglasses, is capable of making it coincide with the interpupillary distance, which differs from individual to individual; the latter function is very important because it eliminates the problems that can be correlated to such aberration (non-coincidence of the optical axes with the pupillary axes).

The illustrated solution can also be useful in the event that, in an eyeglasses frame that is already fitted with lenses, an error is found in the distance of the optical centers in the prescription lenses owing to an error in cutting the lenses or of mounting them in the frame.

Obviously the invention can be implemented both in plastics eyeglasses and in metal eyeglasses.

The present invention thanks to the solution adopted in order to obtain the angular adjustment of the lens mounts makes it possible to limit production of a same model to just one frame, with considerable reduction of industrial costs and easier management of production, in that fewer codes need to be managed.

Opticians, too, will appreciate a great commercial benefit because they will no longer have to maintain stocks for each nosepiece.

Obviously the materials used as well as the dimensions of the individual components of the invention may be more relevant according to specific requirements.

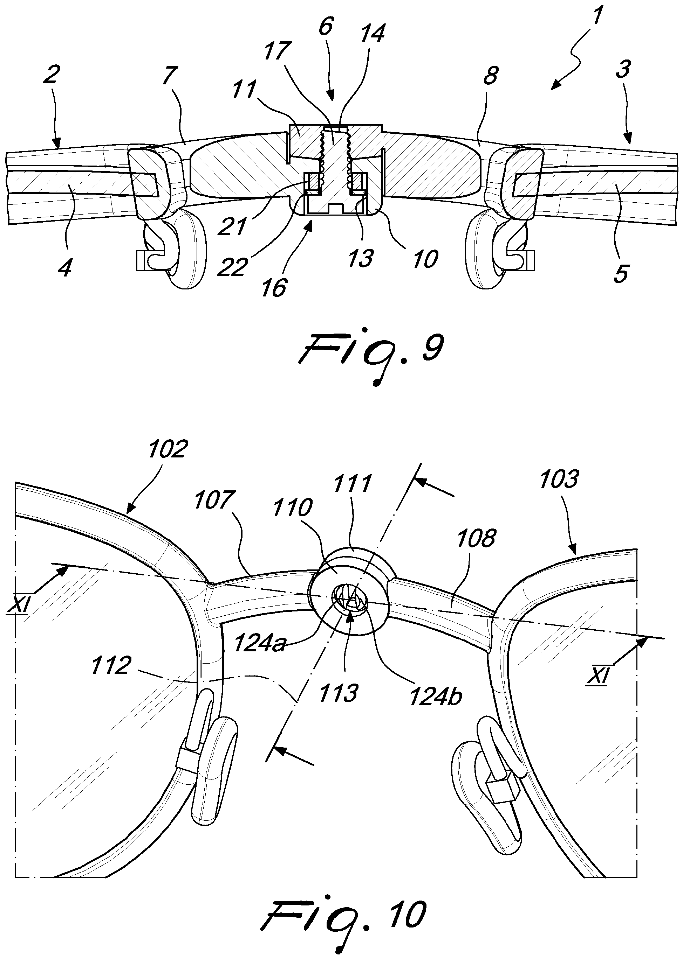

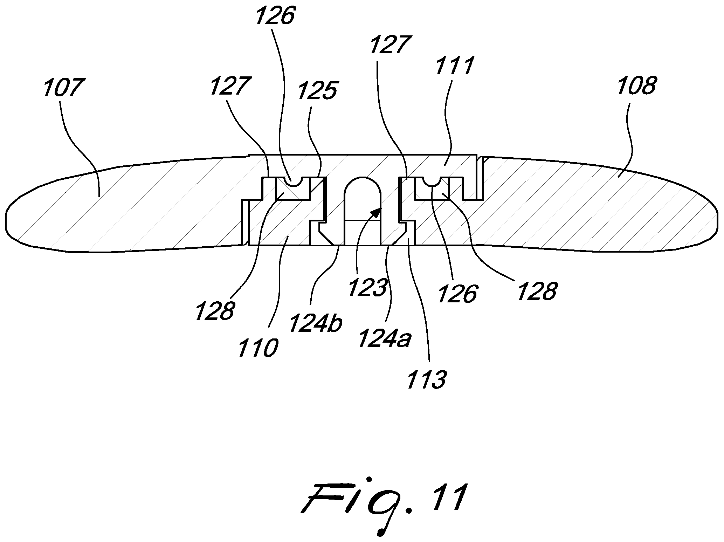

Figures 10 and 11 show an exemplary frame not forming part of the invention in which means for angular adjustment of the optical axes are associated with the ends of the first arm 107 and of the second arm 108, such means being constituted by a first cylindrical sleeve 110 and by a second cylindrical sleeve 111, which protrude radially from the ends, arranging themselves along the same axis 112 that is substantially perpendicular to the plane of arrangement of the first and second supports 102, 103.

The first and second cylindrical sleeves 110, 111 have respectively a first axial seat 113, which is provided with a step-like discontinuity, and a pivot 123, which is substantially U-shaped and the ends 124a, 124b of which, directed toward the first cylindrical sleeve 110, can be compressed elastically and are substantially L-shaped in order to engage temporarily at the step-like discontinuity.

A second seat 125 is provided coaxially at the base of the pivot 123, a plurality of raised portions 126 protruding from the second seat 125 concentrically to the pivot 123.

An annular ridge 127 is arrangeable at the second seat 125 and protrudes from the first cylindrical sleeve 110; the annular ridge 127 is arranged in a region that lies above the plurality of raised portions 126.

An elastically deformable element, such as a ring 128, can be arranged between the annular ridge 127 and the plurality of raised portions 126.

The surface of the ring 128 facing the plurality of raised portions 126 is smooth or has one or more seats on which one or more of the plurality of raised portions 126 can be positioned temporarily and selectively; in the latter case the ring 128 is of the rigid type.

In such solution a decoupling between the first and second cylindrical sleeves 110, 111 is achieved by bringing the ends 124a, 124b of the pivot 123 closer together: this makes it possible to uncouple the plurality of raised portions 126 from the ring 128 and thus allow the mutual rotation between the cylindrical sleeves 110, 111.

Once the angular positioning between these latter items has been arrived at, it is sufficient to reinsert the pivot 123 into the seat 113 and snap-couple the ends 124a, 124b at the step-like discontinuity defined at the first seat 113.

## Claims

1. A frame for corrective eyeglasses and sunglasses, comprising a first support and a second support (2, 3) for a lens (4, 5), and a nosepiece (6) constituted by a first arm (7) and by a second arm (8), which protrude, in mutually opposite directions, from the mutually facing outer lateral surfaces (9a, 9b) of said first and second supports (2, 3) which are interposed and interact selectively with said nosepiece (6) provided with means for angular adjustment of the optical axes about an axis (12) that is substantially perpendicular to the plane of arrangement of the said first and second supports (2, 3), said means for angular adjustment of the optical axes being associated with the ends of said first and second arms (7, 8), said angular adjustment means comprising grip means, according to preset positions along a circumference about said axis (12), for engagement means and elastically deformable means (20, 21) associated with said angular adjustment means of said nosepiece (6), said means for the angular adjustment of the optical axes being constituted by a first cylindrical sleeve (10) and by a second cylindrical sleeve (11), which protrude radially from said ends of said first and second arms (7, 8), arranging themselves along the same axis (12) that is substantially perpendicular to the plane of arrangement of said first and second supports (2, 3), the frame having, at said first and second sleeves (10, 11), said grip means, according to preset positions along said circumference about said axis (12), for said engagement means constituted respectively by a first radial set of teeth (18) and by a second radial set of teeth (19), said sets being provided at the mutually facing lateral surfaces of said first and second sleeves (10, 11), said first and second cylindrical sleeves (10, 11) respectively having a first axial seat (13) and a first hole (14) that is threaded internally, said first axial seat (13) having, in the direction of said second cylindrical sleeve (11), a second hole (15) whose diameter is substantially equal to the diameter of said first hole (14) so as to define a step-like discontinuity, the head of a screw (16) being arrangeable at said first axial seat (13) and its shank (17) passing through at said second hole (15) and being threaded complementarily to said first hole (14), said elastically deformable means being arranged coaxially to the shank (17) of the screw (16) in the region that lies between the head of said screw (16) and said step-like discontinuity defined at said second hole (15) of said first cylindrical sleeve (10).

2. The frame according to claims 1, **characterized in that** said grip and engagement means lie on a plane that is substantially parallel to the plane of arrangement of said first and second supports (2, 3).

3. The frame according to claim 1, **characterized in that** said elastically deformable means comprise one or more Belleville springs (20), which are arranged coaxially to the shank (17) of said screw (16) in the region that lies between the head of the latter and said second hole (15).

4. The frame according to claim 1, **characterized in that** said elastically deformable means comprises a cylindrical block (21) constituted by an elastomer that can be arranged at said first axial seat (13) adjacent to said step-like discontinuity and interacts with an adapted washer (22) that interacts with the head of said screw (16).

5. The frame according to claim 1, **characterized in that** said angular adjustment means comprise said grip means, according to continuous and non-discrete positions along a circumference of said axis (12) that is substantially perpendicular to the plane of arrangement of the said first and second supports (2, 3), for said engagement means and said elastically deformable means that are associated with said nosepiece (6).

## Patentansprüche

1. Ein Rahmen für Sehhilfen und Sonnenbrillen, der einen ersten Träger und einen zweiten Träger (2, 3) für eine Linse (4, 5) und einen Steg (6) umfasst, der aus einem ersten Arm (7) und einem zweiten Arm (8) besteht, welche in entgegengesetzten Richtungen von den einander zugewandten äußeren Seitenflächen (9a, 9b) des ersten und des zweiten Trägers (2, 3) vorstehen, die zwischengeschaltet sind und wahlweise mit dem Steg (6), ausgestattet mit Mitteln zur Winkelanpassung der optischen Achsen um eine Achse (12), die im Wesentlichen senkrecht zur Anordnungsebene des ersten und des zweiten Trägers (2, 3) ist, zusammenwirken; wobei die Mittel zur Winkelanpassung der optischen Achsen mit den Enden des ersten und des zweiten Arms (7, 8) verbunden sind, wobei die Winkelanpassungsmittel in vordefinierten Positionen um einen Umfang um die Achse (12) Greifmittel für Eingriffsmittel und elastisch verformbare Mittel (20, 21) umfassen, die mit den Winkelanpassungsmitteln des Stegs (6) gekoppelt sind; wobei die Mittel zur Winkelanpassung der optischen Achsen in einer ersten zylindrischen Hülse (10) und einer zweiten zylindrischen Hülse (11) bestehen, die radial von den Enden des ersten und des zweiten Arms (7, 8) vorstehen und entlang derselben Achse (12) angeordnet sind, die im Wesentlichen senkrecht zur Anordnungsebene des ersten und des zweiten Trägers (2, 3) ist; wobei der Rahmen an der ersten und der zweiten Hülse (10, 11) in vordefinierten Positionen entlang dem Umfang um die Achse (12) die Greifmittel hat, für die Eingriffsmittel, die aus einem ersten radialen Satz von Zähnen (18) und einem zweiten radialen Satz von Zähnen (19) bestehen, wobei die Sätze an den einander zugewandten Seitenflächen der ersten und der zweiten Hülse (10, 11) angebracht sind; wobei die erste und die zweite zylindrische Hülse (10, 11) einen ersten axialen Sitz (13) beziehungsweise ein erstes Loch (14) mit Innengewinde haben, wobei der erste axiale Sitz (13) in Richtung der zweiten zylindrischen Hülse (11) ein zweites Loch (15) hat, dessen Durchmesser im Wesentlichen gleich dem Durchmesser des ersten Lochs (14) ist, um eine stufenartige Diskontinuität zu bestimmen; wobei der Kopf einer Schraube (16) an dem ersten axialen Sitz (13) angeordnet werden kann und ihr Schaft (17) an dem zweiten Loch (15) durchdringt und ein zu dem ersten Loch (14) komplementäres Gewinde hat; wobei die elastisch verformbaren Mittel in dem Bereich zwischen dem Kopf der Schraube (16) und der stufenartigen Diskontinuität, die an dem zweiten Loch (15) der ersten zylindrischen Hülse (10) bestimmt ist, koaxial mit dem Schaft (17) der Schraube (16) angeordnet sind.

2. Der Rahmen gemäß Anspruch 1, **dadurch gekennzeichnet, dass** die Greif- und Eingriffsmittel auf einer Ebene liegen, die im Wesentlichen parallel zur Anordnungsebene des ersten und des zweiten Trägers (2, 3) ist.

3. Der Rahmen gemäß Anspruch 1, **dadurch gekennzeichnet, dass** die elastisch verformbaren Mittel eine oder mehrere Tellerfedern (20) umfassen, die koaxial mit dem Schaft (17) der Schraube (16) in dem Bereich zwischen dem Kopf Letzterer und dem zweiten Loch (15) angeordnet sind.

4. Der Rahmen gemäß Anspruch 1, **dadurch gekennzeichnet, dass** das elastisch verformbare Mittel einen zylindrischen Block (21) umfasst, der aus einem Elastomer besteht und an dem ersten axialen Sitz (13) angrenzend an die stufenartige Diskontinuität angeordnet werden kann und mit einer entsprechenden Unterlegscheibe (22) zusammenwirkt, welche mit dem Kopf der Schraube (16) zusammenwirkt.

5. Der Rahmen gemäß Anspruch 1, **dadurch gekennzeichnet, dass** die Winkelanpassungsmittel die Greifmittel an durchgängigen und nicht diskreten Positionen entlang einem Umfang der Achse (12) umfassen, die im Wesentlichen senkrecht zur Anordnungsebene des ersten und des zweiten Trägers (2, 3) ist; für die Eingriffsmittel und die elastisch verformbaren Mittel, die mit dem Steg (6) verbunden sind.

## Revendications

1. Monture pour lunettes de vue et pour lunettes de soleil, comprenant un premier support et un second support (2, 3) pour un verre (4, 5), et une tourelle (6) constituée par un premier bras (7) et par un second bras (8), qui font saillie, dans des directions mutuellement opposées, à partir des surfaces latérales externes se faisant mutuellement face (9a, 9b) desdits premier et second supports (2, 3) qui sont interposés et interagissent sélectivement avec ladite tourelle (6) munie de moyens pour un réglage angulaire des axes optiques autour d'un axe (12) qui est sensiblement perpendiculaire au plan d'agencement desdits premier et second supports (2, 3), lesdits moyens pour un réglage angulaire des axes optiques étant associés aux extrémités desdits premier et second bras (7, 8), lesdits moyens de réglage angulaire comprenant des moyens d'accrochage, selon des positions prédéfinies le long d'une circonférence autour dudit axe (12), pour des moyens de mise en prise et des moyens élastiquement déformables (20, 21) associés auxdits moyens de réglage angulaire de ladite tourelle (6), lesdits moyens pour le réglage angulaire des axes optiques étant constitués par un premier manchon cylindrique (10) et par un second manchon cylindrique (11), qui font saillie radialement à partir desdites extrémités desdits premier et second bras (7, 8), s'agençant eux-mêmes le long du même axe (12) qui est sensiblement perpendiculaire au plan d'agencement desdits premier et second supports (2, 3), la monture ayant, au niveau desdits premiers et seconds manchons (10, 11), lesdits moyens d'accrochage, selon des positions prédéfinies le long de ladite circonférence autour dudit axe (12), pour lesdits moyens de mise en prise constitués respectivement par un premier ensemble radial de dents (18) et par un second ensemble radial de dents (19), lesdits ensembles étant ménagés au niveau des surfaces latérales se faisant mutuellement face desdits premier et second manchons (10, 11), lesdits premier et second manchons cylindriques (10, 11) ayant respectivement un premier siège axial (13) et un premier trou (14) qui est taraudé de manière interne, ledit premier siège axial (13) ayant, dans la direction dudit second manchon cylindrique (11), un second trou (15) dont le diamètre est sensiblement égal au diamètre dudit premier trou (14) de façon à définir une discontinuité de type gradin, la tête d'une vis (16) étant apte à être agencée au niveau dudit premier siège axial (13) et sa tige (17) traversant au niveau dudit second trou (15) et étant filetée de manière complémentaire audit premier trou (14), lesdits moyens élastiquement déformables étant agencés de manière coaxiale avec la tige (17) de la vis (16) dans la région qui se trouve entre la tête de ladite vis (16) et ladite discontinuité de type gradin définie au niveau dudit second trou (15) dudit premier manchon cylindrique (10).

2. Monture selon la revendication 1, **caractérisée en ce que** lesdits moyens d'accrochage et de mise en prise se trouvent sur un plan sensiblement parallèle au plan d'agencement desdits premier et second supports (2, 3).

3. Monture selon la revendication 1, **caractérisée en ce que** lesdits moyens élastiquement déformables comprennent un ou plusieurs ressorts Belleville (20), qui sont agencés de manière coaxiale avec la tige (17) de ladite vis (16) dans la région qui se trouve entre la tête de cette dernière et ledit second trou (15).

4. Monture selon la revendication 1, **caractérisée en ce que** lesdits moyens élastiquement déformables comprennent un bloc cylindrique (21) constitué par un élastomère qui peut être agencé au niveau dudit premier siège axial (13) adjacent à ladite discontinuité de type gradin et interagit avec une rondelle adaptée (22) qui interagit avec la tête de ladite vis (16).

5. Monture selon la revendication 1, **caractérisée en ce que** lesdits moyens de réglage angulaire comprennent lesdits moyens d'accrochage, selon des positions continues et non discrètes le long d'une circonférence dudit axe (12) qui est sensiblement perpendiculaire au plan d'agencement desdits premier et second supports (2, 3), pour lesdits moyens de mise en prise et lesdits moyens élastiquement déformables qui sont associés à ladite tourelle (6).
